**Europäisches Patentamt**

**European Patent Office**

**Office européen des brevets**

(19)

(11) Veröffentlichungsnummer: **0 108 411**
**B1**

(12) **EUROPÄISCHE PATENTSCHRIFT**

(45) Veröffentlichungstag der Patentschrift:
15.07.87

(51) Int. Cl.⁴: **B 23 B 45/16, B 25 D 16/00**

(21) Anmeldenummer: **83111075.4**

(22) Anmeldetag: **07.11.83**

(54) **Bohrmaschine, insbesondere Handbohrmaschine.**

(30) Priorität: **10.11.82 DE 3241528**

(43) Veröffentlichungstag der Anmeldung:
**16.05.84 Patentblatt 84/20**

(45) Bekanntmachung des Hinweises auf die Patenterteilung:
**15.07.87 Patentblatt 87/29**

(84) Benannte Vertragsstaaten:
**AT BE CH DE FR GB IT LI LU NL SE**

(56) Entgegenhaltungen:
**EP - A - 0 048 482**
**CH - A - 627 117**
**DE - A - 2 551 125**
**DE - A - 2 806 611**
**DE - A - 2 842 783**
**DE - A - 3 118 691**
**FR - A - 2 454 864**
**GB - A - 2 058 645**
**GB - A - 2 114 496**

(73) Patentinhaber: **Eugen Lutz GmbH & Co.**
**Maschinenfabrik, Pinacher Strasse,**
**D-7130 Mühlacker-Lomersheim (DE)**

(84) Benannte Vertragsstaaten: **DE**

(73) Patentinhaber: **Black & Decker Overseas AG,**
**Staedtle 36, FL-9490 Vaduz (LI)**

(84) Benannte Vertragsstaaten: **BE CH FR GB IT LI LU NL SE**
**AT**

(72) Erfinder: **Bergler, Otto, Jahnstrasse 18/1,**
**D-7130 Mühlacker-Lomersheim (DE)**

(74) Vertreter: **Wilhelm, Hans-Herbert, Dr.-Ing. et al, Wilhelm**
**& Dauster Patentanwälte Hospitalstrasse 8,**
**D-7000 Stuttgart 1 (DE)**

EP 0 108 411 B1

## Beschreibung

Die Erfindung betrifft eine Bohrmaschine, insbesondere eine Handbohrmaschine, mit der wahlweise die Drehbewegung einer hohlen Antriebsspindel auf ein Bohrwerkzeug übertragen, oder eine von einem durch die Antriebsspindel geführten Schlagbolzen auf das Ende eines in einer Schlagbohrhaltung axial beweglich geführten Bohrwekzweuges ausgeübte Schlagwirkung erzeugt werden kann.

Solche Handbohrmaschinen sind bekannt (Bedienungsanleitung Hilti, Bohrhammer TE 12, 1981). Bei den bekannten Bauarten, bei denen der Drehantrieb über einen Elektromotor und auch der Antrieb des Schlagbolzens über einen vom Elektroantrieb hin und her bewegten Kolben pneumatisch erfolgt, müssen spezielle Schlagbohrwerkzeuge für den Schlagbohrbetrieb vorgesehen werden, die für die formschlüssige Mitnahme ausgelegt sind. So ist es bekannt, am Schaft der Bohrwerkzeuge entweder längs verlaufende Nuten für einen Eingriff mit an dem Bohrhammer vorgesehenen Kugeln vorzusehen, oder den Schaft als Sechskant o. dgl. auszubilden, der in einer entsprechenden formschlüssigen Führung die drehfeste Mitnahme bei axialer Beweglichkeit ermöglicht. Die bekannten Bauarten weisen zwar auch eine Schaltstellung auf, in der im wesentlichen nur die Drehbewegung übertragen wird, nachteilig ist aber, dass die Spezialwerkzeuge auch dann in Axialrichtung beweglich bleiben und auch in Umfangsrichtung nicht exakt geführt sind. Nachteilig ist ferner, dass übliche Bohrwerkzeuge, wie sie für reine Bohrmaschinen eingesetzt werden, nur unter Zwischenhaltung eines zusätzlichen Bohrfutters verwendbar sind, das wiederum einen entsprechend dem Schaft der Schlagbohrwerkzeuge ausgebildeten Befestigungsschaft aufweist und daher ebenfalls nicht einwandfrei drehfest und axial gesichert werden kann.

Bekannt sind Handbohrmaschinen, bei denen dem Drehantrieb für das Bohrfutter ein ratschenartiges Zwischenstück zugeordnet ist (DE-AS 1 155 657), das ebenfalls für eine gewisse Schlagbewegung sorgt, die allerdings nicht mit der intensiven und tatsächlichen Schlagbewegung zu vergleichen ist, wie sie mit den eingangs genannten Bohrhämmern zu erzielen ist. Maschinen der zuletzt genannten Art können zwar – insbesondere für Haushaltzwecke – für reine Bohrarbeiten und im gewissen Umfang auch für dem Schlagbohren ähnliche Arbeiten eingesetzt werden, sind aber überall da, wo es auf eine intensive Schlagwirkung, beispielsweise zum Bohren in Beton oder Stein ankommt, nicht verwendbar.

Durch die DE-OS 3 132 450 ist ein Werkzeugspannfutter für ein Bohrwerkzeug bekannt, das nicht als Schlagbohrwerkzeug ausgelegt ist und daher auch nicht die bei den Schlagbohrwerkzeugen sonst erreichbare intensive Schlagwirkung ausüben kann. Dort ist das Bohrfutter mit radial verstellbaren Klemmbacken versehen, die bei der Betätigung der Schraubhülse gegen den Bohrer gepresst werden. Eine gewisse Schlagwirkung wird dadurch erreicht, dass der Döpper auf das Ende des Bohrwerkzeuges und auf das Ende der Klemmbacken auftrifft, so dass insofern – wie bei den vorher erwähnten Handbohrmaschinen gemäss der DE-AS 1 155 657 – eine gewisse Schlagwirkung erreicht wird, die aber in der Regel für ein echtes Schlagbohren nicht ausreicht. Hierzu sind Schlagbohrhalterungen notwendig, wie sie eingangs erwähnt (Hilti) oder beispielsweise in der DE-OS 2 551 125 gezeigt sind. Bei der Einrichtung der DE-OS 3 132 450 muss daher das dort vorgesehene Bohrfutter durch eine Schlagbohrhalterung gemäss der DE-OS 2 551 125 ersetzt werden.

Der vorliegenden Erfindung liegt die Aufgabe zugrunde, eine Bohrmaschine, insbesondere eine Handbohrmaschine der eingangs genannten Art so auszubilden, dass sie sowohl für den Einsatz mit Bohrwerkzeugen mit einem glatten Schaft als auch für den Einsatz als Bohrhammer geeignet ist, ohne dass ein Bohrfutter auf- und abmontiert werden muss.

Die Erfindung besteht bei einer Bohrmaschine der eingangs genannten Art in den kennzeichnenden Merkmalen des Patentanspruches 1. Diese Ausgestaltung weist den Vorteil auf, dass das Bohrfutter fest an dem Drehwerk befestigt ist, so dass auch die von den Klemmbacken gehaltenen Bohrwerkzeuge sowohl in Umfangsrichtung als auch axial einwandfrei geführt sind. Weil das Bohrfutter nach hinten offen ist, kann im Gegensatz zu bekannten Bauarten der Schlagbolzen wie bei Bohrhämmern durchgeführt werden, so dass, wenn die Klemmbacken zurückgedreht sind, nach dem Wirksamwerden der Schlagbohrhalterung der Einsatz als Bohrhammer möglich ist. Die Schlagbohrhalterung kann auf verschiedene Weise realisiert werden und kann sich an den bekannten Systemen der Schlagbohrwerkzeughalterung orientieren. Besonders vorteilhaft ist es, wenn die Schlagbohrhalterung aus mindestens zwei radial beweglichen und von einer axial bewegbar im Bohrfutter geführten Hülse gehaltenen Kugeln besteht, die an einer schrägen Anlauffläche der unter Federdruck stehenden Hülse anliegen und in Axialnuten eines Schlagbohrwerkzeuges eingreifen. Die Hülse kann dabei von einer verdrehbaren Aussenkappe des Bohrfutters umgeben sein, die mit gewindeartigen Innenvorsprüngen mit Spiel in entsprechende nach aussen gerichtete Vorsprünge am Umfang der Hülse greift und diese in zwei einstellbaren Endlagen jeweils für den Einsatz zum Bohren bzw. zum Schlagbohren arretiert. Bei dieser Ausführung kann der Drehbereich der Aussenkappe mit Hilfe von Einrastmitteln festgelegt und durch Endanschläge begrenzt sein, wobei in diesem Fall die Klemmflächen der Klemmbacken auch als Führungsflächen für das axial hin- und herbewegte Schlagbohrwerkzeug dienen.

Um zu verhindern, dass die für die Halterung des Schlagbohrwerkzeuges notwendigen Kugeln beim reinen Bohrbetrieb die Funktion der Klemmbacken behindern, können sie in der Stellung Bohren ihre Haltehülse an der vom Bohrwerkzeug abgewandten Seite der Klemmbacken an diesen anliegen und in einer radialen Stellung gehalten sein, in der sie nicht in den Bereich der lichten Weite zwischen den Klemmbacken hereinragen. Bei zurückgestellten Klemmbacken dagegen und in der Lage Schlagbohren werden sie von dem Ende der zurückgestellten Klemmbacken radial freigegeben und können ihre Befestigungsaufgabe übernehmen. Dabei kann noch vorgesehen werden, dass am äussersten Ende der Klemmbacken und am Bohrfutterkern jeweils Haltenasen vorgesehen sind, die das vollständige Herausfallen der Kugeln aus ihrer Halterung verhindern.

Eine weitere Verbesserungsmöglichkeit besteht darin, dass die Aussenkappe mit Aussparungen am Umfang versehen ist, die in der Endlage, in der die Haltehülse die Stellung Bohren einnimmt und die Kugeln radial freigibt, mit bekannten Einstecköffnungen für den Verstellschlüssel für die Klemmbacken fluchten; in der anderen Endlage Schlagbohren dagegen verdreht gegenüber den dann verdeckten Einstecköffnungen sind. Diese Ausgestaltung, zu der der Verdrehbereich der Aussenkappe nur etwa 60° betragen muss, weist den Vorteil auf, dass ein Verstellen der Klemmbacken in der Einstellung Schlagbohren nicht möglich ist. Um zusätzlich sicherzustellen, dass der Schlagbolzen in der Stellung Bohren auf das Ende des eingespannten Bohrers trifft, kann der Aussenkappe ausserdem ein radial nach innen ragender Nocken zugeordnet sein, der in der Stellung Bohren einen im Bohrfutter gelagerten Sicherungsstift radial gegen Federkraft in den Bereich zwischen den Klemmbacken hereindrückt, der kurz vor dem Ende des in das Bohrfutter hereinragenden Schlagbolzens liegt. Selbst wenn daher das Bohrwerkzeug in den Klemmbacken zu weit nach innen ragend eingespannt werden sollte, so kann es nicht weiter als bis zu dem Sicherungsstift eingeführt werden, so dass das Berühren des Stirnendes des Bohrers durch den Schlagbolzen ausgeschlossen bleibt.

Bei der eben geschilderten Ausführungsform, bei der die Klemmflächen der Klemmbacken gleichzeitig mit für die Führung des Schlagbohrwerkzeuges sorgen, ist der Durchmesser für die einzuspannenden Bohrwerkzeuge durch diese Endlage begrenzt. Da die Schlagbohrwerkzeuge alle einen verhältnismässig dünnen Einspannschaft besitzen, wäre bei dieser Ausführungsform das Einspannen dickerer, reiner Bohrwerkzeuge nicht möglich.

Vorteilhaft kann bei einer anderen Ausführung daher vorgesehen sein, dass in die Durchgangsöffnung des Bohrfutters eine drehfest mit der Antriebsspindel verbundene und axial verschiebbare Schalthülse hereinragt, die in jeweils dem Einsatz zum Bohren oder Schlagbohren zugeordneten Endstellungen arretierbar ist und an ihrem in das Bohrfutter hereinragenden Ende die Mittel zur drehfesten Verbindung, aber axialen Führung eines Schlagbohrwerkzeuges besitzt. Diese Ausführung weist daher den Vorteil auf, dass diese Schalthülse gehen kann, so dass je nach Wahl der Wandstärke dieser Schalthülse eine beachtliche Vergrösserung des Einspanndurchmessers für Bohrwerkzeuge erreicht ist. Diese Ausführung weist auch den Vorteil auf, dass am Bohrfutter selbst nicht unbedingt auch der Verstellmechanismus für die Mittel zum Einspannen der Schlagbohrwerkzeuge vorgesehen sein muss. Da die Schalthülse axial hin und her schiebbar ist, kann mit ihr auch die Ein- und Ausschaltung der Befestigungsmittel für das Schlagbohren gesteuert werden, wie das im einzelnen noch erläutert wird. Der Vorteil dieser Ausführungsform liegt daher auch darin, dass die Länge des Bohrfutters der eines üblichen Bohrfutters entspricht, so dass eine sehr kompakte und daher handliche Handbohrmaschine entsteht.

Bei einer vorteilhaften Ausführungsform kann das Bohrfutter aussen auf die hohle Antriebsspindel aufgeschraubt sein, wobei die Schalthülse im Inneren der Antriebsspindel geführt ist und ihrerseits zur Führung des Schlagbolzens dient. Der Schalthülse wird ein solcher Axialhub zugeordnet, dass sie in der Endlage, die dem Einsatz zum Bohren entspricht, mit ihrem Stirnende hinter dem Bereich der Zustellführung der Klemmbacken liegt, während sie in der Endlage Schlagbohren zwischen die radial zurückgedrehten Enden der Klemmbacken reicht und von diesen radial gehalten werden kann. Um, wie vorher angedeutet, das Bohrfutter selbst nicht durch zusätzliche Teile zu vergrössern, können die Endlagen der Schalthülse über eine aussen an der Antriebsspindel geführte Arretierhülse gesichert werden, die axial fest mit der Schalthülse verbunden ist und von aussen in zwei Endlagen verschiebbar und dort arretierbar ist. Um für die Betätigungsmittel von der Drehbewegung unabhängig zu sein, die sowohl die Antriebsspindel als auch die in dieser geführte Schalthülse durchführen, kann die Arretierhülse über einen radial verlaufenden und durch einen Längsschlitz in der Antriebsspindel geführten Stift mit der Schalthülse und über eine lösbare Kupplung mit einem aussen am Gehäuse der Bohrmaschine geführten Handgriff o.dgl. verbunden sein. Um die Arretierhülse nun in der einen Endlage zu sichern, kann der Stift in der Arretierhülse in einem in Umfangsrichtung verlaufenden Langloch beweglich angeordnet sein, dessen Länge mindestens der Länge von bajonettverschlussartig ausgebildeten Ausnehmungen an der Innenseite der Arretierhülse entspricht, die mit fest an der Antriebsspindel angeordneten Verriegelungsvorsprüngen zur Sicherung der Endlage Schlagbohren der Schalthülse zusammenwirken.

Zur Sicherung der anderen Endlage, d.h. der Stellung «Bohren», kann die Arretierhülse an dem von den bajonettverschlussartigen Ausnehmungen abgewandten Ende mit federnden Rastarmen versehen sein, die zur Sicherung der anderen Endlagen über einen Wulst an der Antriebsspindel einrastend greifen. Aus diesen beiden Endlagen kann die Arretierhülse dann jeweils über den Betätigungsgriff von aussen verschoben werden, was durch die vorher erwähnte Kupplung geschieht. Die Kupplung besteht zweckmässig aus einem verdrehbar und axial verschiebbar auf der Arretierhülse angeordneten Mitnehmerring, der mit dem Handgriff fest verbunden ist und an Anschlägen in der Arretierhülse anlegbar ist, wobei der den bajonettverschlussartig ausgebildeten Ausnehmungen zugewandte Anschlag der Arretierhülse als ein mit axialen Vorsprüngen vorzugsweise in der Art einer Verzahnung versehener Anschlagkragen ausgebildet sein, wobei der Mitnehmerring mit korrespondierenden Verzahnungen ausgestattet ist, die formschlüssig mit den Verzahnungen der Arretierhülse zusammenwirken und eine für die Bajonettverrastung ausreichende Verdrehung der Arretierhülse in der Endlage «Schlagbohren» von aussen ermöglichen.

Um sicherzustellen, dass der Mitnehmerring, der gegen Federkraft in Richtung auf die Verzahnung des Anschlagkragens drückbar ist, nach der Einrastung der Arretierhülse wieder aus der Verzahnung freikommt, kann der Mitnehmerring über zwei diametral gegenüberliegende Stifte mit dem das Gehäuse aussen um mindestens 180° umgebenden Handgriff in Verbindung stehen, wobei die Stifte in Längsschlitzen im Gehäuse geführt sind, und diese Längsschlitze mindestens an dem dem Bohrfutter zugewandten Ende eine Verbreiterung in Umfangsrichtung aufweisen, die dem zur Bajonettverrastung nötigen Verdrehweg entspricht. Die Verbreiterung der Längsschlitze muss auch eine axiale Ausdehnung aufweisen, die mindestens dem Durchmesser der den Mitnehmerring mit dem Handgriff verbindenden Stifte zuzüglich der Höhe der Verzahnung am Anschlagkragen entspricht. Bei einer solchen Ausführung löst sich die Verzahnung des Mitnehmerringes unter der Wirkung der Federkraft selbstätig von der eingerasteten Arretierhülse, so dass alle im Gehäuse liegenden Teile in Drehung versetzt werden können.

Die am Ende der Schalthülse angeordneten Mittel zur drehfesten Verbindung und zur axialen Führung eines Schlagbohrwerkzeuges können sich ebenfalls an die bekannten Mittel anlehnen. Vorteilhaft ist es, wenn diese Mittel aus Kugeln bestehen, die in Ausnehmungen der Schalthülse radial beweglich geführt und in der Stellung «Bohren» der Schalthülse von dem in der Schalthülse geführten Schlagbolzen in Längsnuten der Antriebsspindel gedrückt sind und damit ausser Funktion sind, während sie in der Stellung «Schlagbohren» in das Innere der Schalthülse und in korrespondierende Ausnehmungen des Schlagbohrwerkzeuges hereinragen und in dieser Lage durch aussen an die Schalthülse angrenzende Teile des Bohrfutters vorzugsweise durch die Klemmflächen der Klemmbacken gehalten sind. Bei dieser Ausführungsform können die Längsnuten in der Antriebsspindel zum Bohrfutter hin offen sein und es kann die Anordnung so getroffen werden, dass vor jeder Längsnut schräg zur Achse der Antriebsspindel verlaufende Innenseiten der Klemmbacken vorgesehen sind, so dass diese beim Vorschieben der Schalthülse in die Stellung «Schlagbohren» die aus den Längsnuten der Antriebsspindel austretenden Kugeln erfassen und radial nach innen zum Eingriff in die Längsnuten der Schlagbohrwerkzeuge führen.

Die Ausführungsform der neuen Bohrmaschine mit einer Schalthülse weist auch den Vorteil auf, dass die Schalthülse eine Auswerferfunktion für die eingesetzten Bohrhämmer übernehmen kann, da sie in die Stellung «Bohren» relativ zum Schlagbolzen zurückgezogen wird, der dann auf das Ende des Bohrhammers drückt und diesen auswirft.

Weitere Vorteile und Merkmale der Erfindung ergeben sich aus den übrigen Unteransprüchen und aus der nachfolgenden Beschreibung von zwei Ausführungsbeispielen, die in der Zeichnung dargestellt sind. Es zeigen:

Fig. 1 einen schematischen Längsschnitt durch den Bohrkopf einer neuen Schlagbohrmaschine mit einem fest am Drehantrieb befestigten Bohrfutter und einer im Bohrfutter integrierten Halterung für Bohrhämmer,

Fig. 2 den Schnitt durch die Ausführung der Fig. 1 längs der Linie II–II,

Fig. 3 den Schnitt durch die Ausführungsform der Fig. 1 längs der Linie III–III,

Fig. 4 eine Teildarstellung des vorderen Endes des Bohrfutters der Ausführung der Fig. 1 in der Stellung mit eingesetztem Bohrhammer bzw. in der unteren Hälfte in der Lage während des Einsetzens des Bohrhammers, jeweils der Deutlichkeit halber ohne die in dieser Lage zurückgedrehten Klemmbacken,

Fig. 5 eine andere Ausführungsform des Bohrkopfendes einer erfindungsgemässen Handbohrmaschine, bei der eine axial verschiebbare Schalthülse in das Bohrfutter hereinschiebt, und zwar in der Stellung «Schlagbohren»,

Fig. 6 die Ausführungsform der Fig. 5 jedoch in der Stellung «Bohren» mit zurückgezogener Schalthülse,

Fig. 7 den Schnitt durch die Ausführungsform der Fig. 5 längs der Linie VII-VII,

Fig. 8 den Schnitt durch die Ausführungsform der Fig. 6 längs der Linie VIII-VIII,

Fig. 9 eine Detaildarstellung der bei der Ausführung der Fig. 5 und 6 zur Endlageneinstellung der Schalthülse vorgesehene Arretierhülse im Längsschnitt,

Fig. 10 eine Seitenansicht der Arretierhülse der Fig. 9 und

Fig. 11 die Stirnansicht der Arretierhülse der Fig. 10 in Richtung des Pfeiles 11 gesehen.

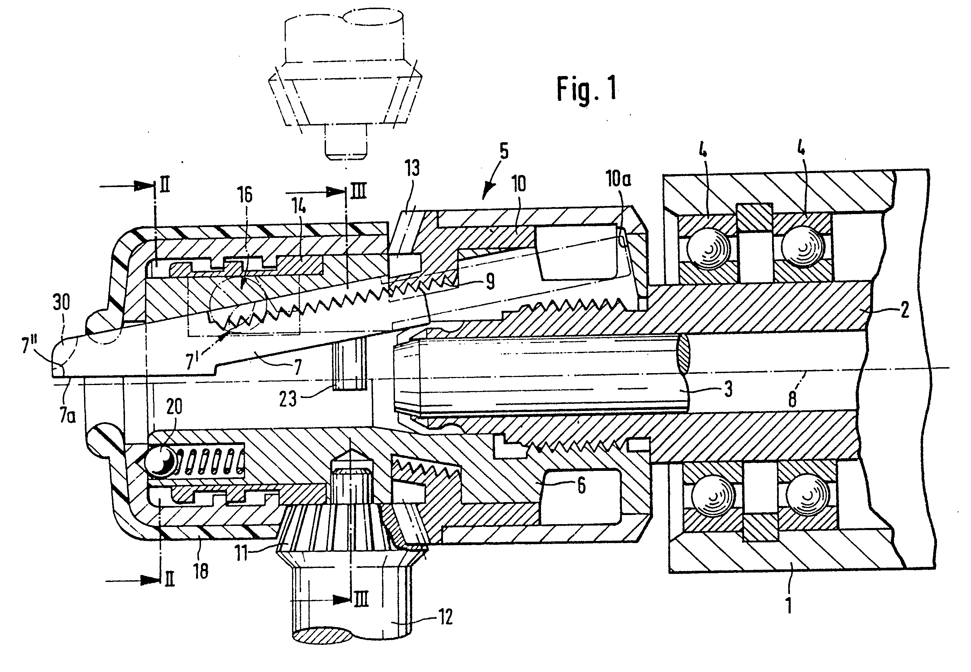

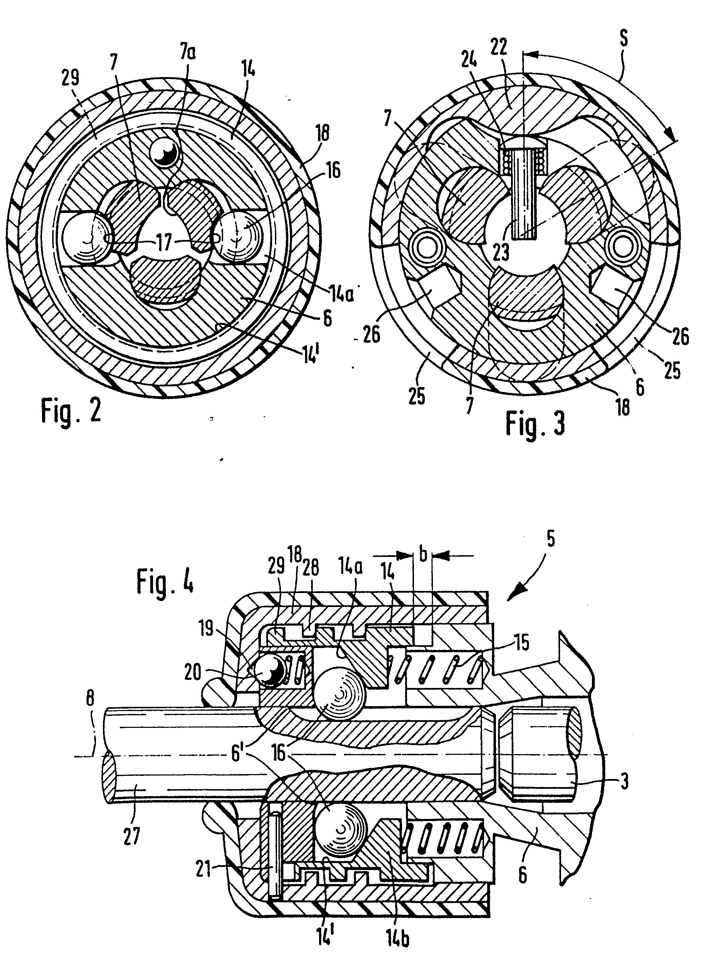

Der Fig. 1 ist das vordere Ende eines Gehäuses 1 einer Handbohrmaschine gezeigt, aus dem eine in nicht näher gezeigter Weise mit einem Drehantrieb verbundene Antriebsspindel 2 herausragt. Die Antriebsspindel 2 ist hohl und dient als Führung für einen Schlagbolzen 3, der von einem Schlagkolben her axiale Schläge erhält und diese, wie aus Fig. 4 erkennbar ist, auf ein eingesetztes Schlagbohrwerkzeug, beispielsweise einen Bohrhammer, weiterleiten kann. Sowohl der über einen Elektromotor bewirkte Drehantrieb für die Antriebsspindel 2, die über Kugellager 4 im Gehäuse 1 gelagert ist, als auch der Schlagantrieb für den Schlagbolzen 3 sind nicht gezeigt, weil diese Antriebe in bekannter Weise ausgebildet sein können und sich aus dem eingangs zitierten Stand der Technik ergeben.

Auf das Ende der Antriebsspindel 2 ist ein Bohrfutter 5 aufgeschraubt, das beim Ausführungsbeispiel aus einem Bohrfutterkern 6 besteht, in dem in der von Bohrfuttern her bekannten Weise Klemmbacken 7 schräg zur Achse 8 der Antriebsspindel 2 gelagert sind, die mit einem Verstellgewinde in ein Gewinde 9 eines Drehringes 10 eingreifen, der seinerseits, wie ebenfalls von Bohrfuttern bekannt, über einen Steckschlüssel 12, der mit einer kegeligen Verzahnung 11 in eine korrespondierende Verzahnung 13 des Drehringes 10 eingreift und so die Zustellung der Klemmbacken 7 ermöglicht. In der in der Fig. 1 dargestellten Lage sind die Klemmbacken 7 mit ihren Klemmflächen 7a in ihre radial innerste Stellung verschoben. Die radial am weitesten geöffnete Stellung ist strichpunktiert angedeutet. Das Ende der Klemmbacken liegt dann an der schrägen Wand 10a des Drehringes 10 an. Das vordere Ende der Klemmbacken 7 ist in dieser Lage mit 7' gekennzeichnet. In dem Bereich des Bohrfutterkernes 6, in dem die aussenliegenden Seiten der Klemmbacken 7 an einer Keilfläche geführt sind, ist im Bohrfutter 5, wie insbesondere den Fig. 2 bis 4 zu entnehmen ist, eine Hülse 14 axial verschiebbar gelagert, die den Bohrfutterkern 6 ringförmig umgibt und mit zwei Vorsprüngen 14b mit schrägen Flächen 14a in Ausnehmungen des Bohrfutterkerns hereinragt, in denen diametral gegenüberliegend zwei Kugeln 16 gehalten sind. Diese Kugeln 16 werden in der Stellung «Bohren», wie sie in Fig. 1 gezeigt ist, wo die Klemmbacken 7 radial nach innen gefahren sind, von entsprechenden Führungsnuten 17 an der Rückseite der Klemmbacken gehalten und gegen die zylindrische Innenwand 14' der Hülse 14 gedrückt, wie das insbesondere aus Fig. 2 zu erkennen ist. Sie behindern daher die Wirksamkeit der Klemmflächen 7a der Klemmbacken 7 für den Einsatz zum Bohren nicht.

Der Bohrfutterkern 6 und die Hülse 14 sind aussen von einer Aussenkappe 18 umgeben, die gegenüber dem Bohrfutterkern, wie aus Fig. 3 erkennbar ist, um einen Schaltweg s von 60° verdrehbar ist. Die beiden Endstellungen der Aussenkappe 18 werden dabei durch Vertiefungen 19 am vorderen Teil der Aussenkappe 18 gesichert, in die eine unter Federkraft stehende Rastkugel 20 einrastet, wenn die entsprechende Stellung erreicht ist. Ein Stift 21 dient jeweils als Endanschlag zur Begrenzung des Schaltweges s. Er ist in einem entsprechenden Schlitz des Bohrfutterkernes 6 geführt. Durch die Verdrehung der Aussenkappe lässt sich nun die Handbohrmaschine jeweils in die Einsatzstellung «Bohren» oder «Schlagbohren» bringen. Das geschieht auf folgende Weise:

Wie bereits anhand der Fig. 1 bis 3 erläutert wurde, befinden sich die Kugeln 16 in der Stellung «Bohren» in Anlage an der Innenwand 14' der Hülse 14 und werden dort durch die Klemmbacken 7 gehalten. In dieser Stellung greift ausserdem ein an der Innenseite der Aussenkappe 18 vorgesehener Nocken 22 an dem Ende eines Sicherungsstiftes 23 an, der radial verschiebbar im Bohrfutterkern 6 gelagert ist. Der Sicherungsstift 23 wird dadurch gegen die Kraft einer Rückstellfeder 24 radial in den Bereich zwischen den Klemmbacken 7 hereingeschoben. Er sitzt, wie aus Fig. 1 ersichtlich ist, in einem Bereich hinter den Klemmflächen 7a der Klemmbacken 7 und noch vor dem Ende des Schlagbolzens 3. Der Sicherungsstift 23 verhindert auf diese Weise ein ungewolltes Hereinschieben eines Bohrwerkzeugschaftes so weit in das Bohrfutter, dass der Schlagbolzen 3 auf die hintere Stirnfläche des Bohrwerkzeuges auftreffen kann.

In dieser Stellung «Bohren», wie sie in den Fig. 1 bis 3 gezeigt ist, fluchten ausserdem Ausnehmungen 25 im Mantel der Aussenkappe 18 mit den beiden Sackführungslöchern 26, die zum Einsetzen des Stellschlüssels 12 dienen. In der Stellung «Bohren» der Aussenhülse 18 also ist auch das Verstellen der Klemmbacken 7 je nach Durchmesser des verwendeten Bohrwerkzeuges möglich.

Zur Umstellung in die Stellung «Schlagbohren» wird die Aussenhülse 18 um den Schaltweg s gegenüber dem Bohrfutterkern 6 verdreht, was durch Verdrehen von Hand bei festgehaltener Handbohrmaschine geschieht. Der Nocken 22 entfernt sich bei dieser Drehbewegung daher von dem Ende des Sicherungsstiftes 23, der von der Kraft der Feder 24 wieder radial nach aussen gedrückt wird und so nicht mehr in dem Bereich der lichten Weite zwischen den Klemmbacken 7 hereinragt. Mit dem Verdrehvorgang wird aber auch eine Wirkung auf die Hülse 14 und damit auf die Kugeln 16 ausgeübt, die nun, nachdem die Klemmbacken 7 in ihre voll zurückgedrehte Lage gebracht wurden (Endstellung 7'), zur drehfesten Führung eines Schlagbohrwerkzeuges 27 eingesetzt werden soll. Zu diesem Zweck stehen von der Innenwand der Aussenkappe 18 Vorsprünge 28 ab, die in der Art von Gewindestücken ausgebildet sind. Diese Vorprünge wirken mit korrespondierend angeordneten Ringen 29 der Hülse 14 so zusammen, dass bei der Verdrehung eine Arretierung der Hülse 14 in der in der Fig. 1 gezeigten Endlage, in der die Kugeln an der Wand 14' anliegen können, oder in der die in der Fig. 4 in der oberen Hälfte gezeigten Endlage erreicht wird, in der die Vorsprünge 28 als Anschläge für die durch die Kraft der Feder 15 nach links gedrückte Hülse 14 dienen. Die Kugeln 16 sind in dieser Endlage, die der Lage «Schlagbohren» entspricht, axial frei beweglich und lassen daher eine Axialbewegung des Schlagbohrwerkzeuges 27 zu. Durch die federnde Andrückkraft der Wand 14a werden sie aber an einem radialen Auswandern gehindert.

In der unteren Hälfte der Fig. 4 ist die Lage der Hülse 14 gezeigt, die beim Einsetzen eines Schlagbohrwerkzeuges 27 eintritt.

Da die Hülse 14 in der Endlage «Schlagbohren» nur an einer Bewegung nach links gehindert ist, jedoch nicht an einer Axialbewegung nach rechts, werden die zunächst noch in der radial nach innen gedrückten Lage befindlichen Kugeln 16 von dem Ende des Schlagbohrwerkzeuges 27 radial nach aussen in die in der unteren Hälfte gezeigte Lage gedrückt. Sie können von dort aus wieder in die Längsnut 27a des Schlagbohrwerkzeuges 27 zurückgedrückt werden, wenn das Ende des Schaftes die Kugeln passiert hat. Zum Lösen des Schlagbohrwerkzeuges 27 wird die Hülse 14 in die in der Fig. 1 gezeigte Endlage durch Verdrehen der Aussenkappe 18 gebracht. Beim Herausziehen des Schaftes des Schlagbohrwerkzeuges 27 gleiten dann die Kugeln 16 an der schrägen Fläche der Nuten 27a radial nach aussen und können dann beim erneuten Zustellen der Klemmbacken von der Rückseite der Klemmbacken vollständig in ihre Lage nach Fig. 1 nach aussen gedrückt werden.

Um zu verhindern, dass die Kugeln beim Herausnehmen oder vor dem Einsetzen des Schlagbohrwerkzeuges 27 vollständig aus dem Bohrfutterkern 6 herausfallen, ist dieser jeweils mit Nasen 6' auf der den Kugeln 16 zugewandten Seite versehen. Diese Nasen 6' arbeiten mit Nasen 7' zusammen, die an der Innenseite der Klemmbacken 7 durch an der Vorderseite vorgesehene Ausnehmungen 30 entstehen (Fig. 1). Die beiden Nasen 6' und 7'' sind in ihrer gegenseitigen Lage so bemessen, dass ihr gegenseitiger Abstand etwas kleiner als der Kugeldurchmesser ist. Die Kugeln werden so sicher im Bohrfutter gehalten.

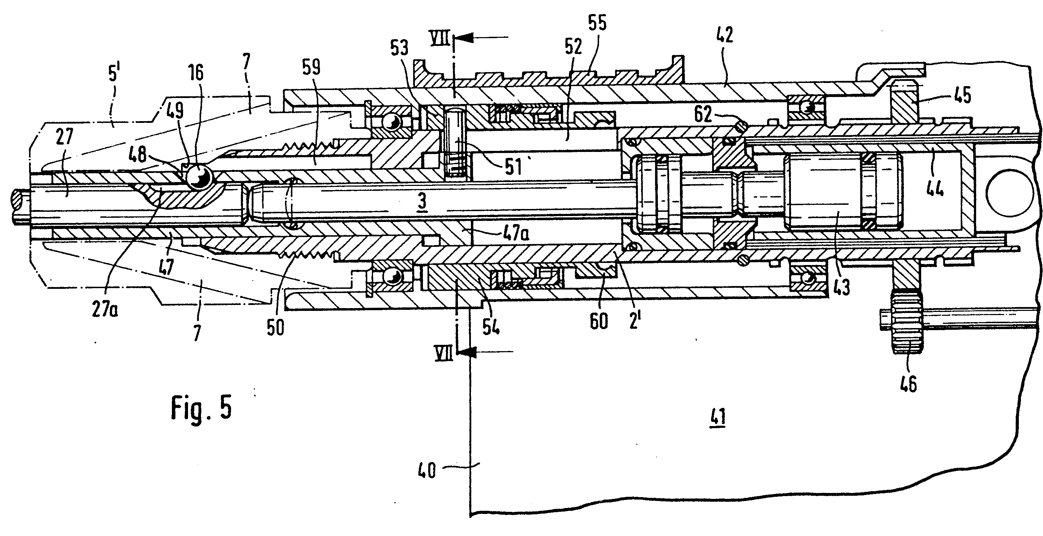

In den Fig. 5 bis 11 ist eine andere Ausführungsform der Erfindung gezeigt, bei der zwar ebenfalls eine Schlagbohrhalterung verwendet wird, die mit radial in seitlichen Nuten des Schaftes von Schlagbohrwerkzeugen greifenden Kugeln arbeitet, die Umschaltung zwischen dem Einsatz zum Bohren oder zum Schlagbohren wird aber in anderer Weise vorgenommen.

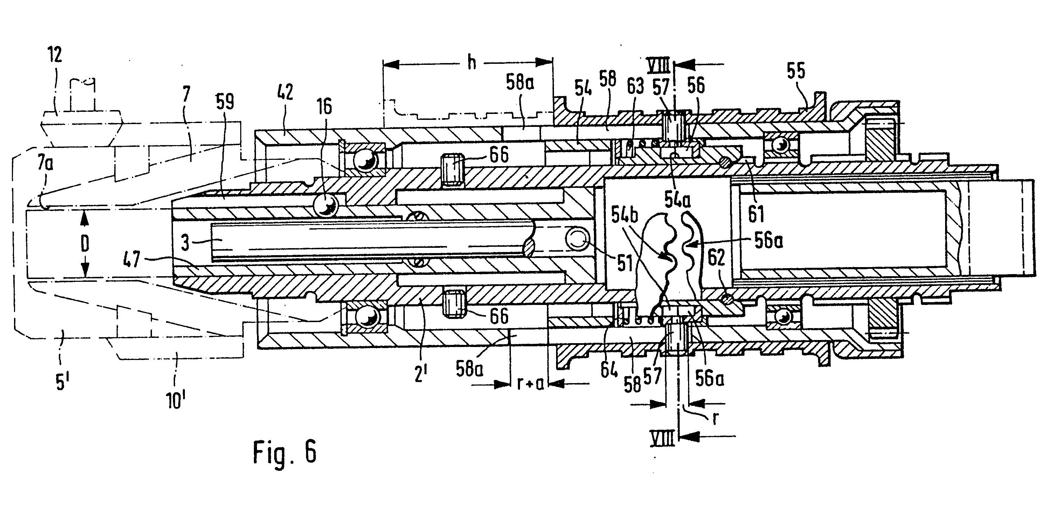

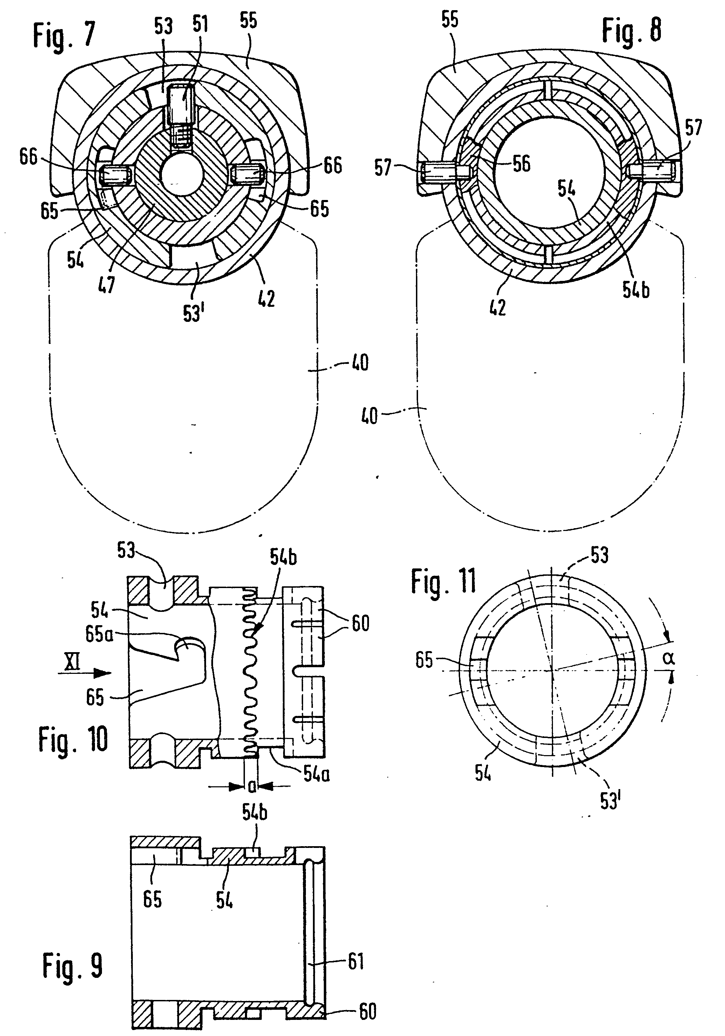

In der Ausführungsform der Fig. 5 ist die neue Handbohrmaschine in der Stellung «Schlagbohren» gezeigt. Bei dieser Handbohrmaschine ist innerhalb eines Bohrmaschinengehäuses 40, das, wie schematisch angedeutet, in einen Handgriff 41 übergeht und im Inneren in nicht gezeigter Weise einen Antriebsmotor elektrischer Art aufweist, ein Lagerrohr 42 zur Lagerung der drehbaren Antriebsspindel 2' vorgesehen, die ebenfalls hohl ausgebildet ist und in ihrem Inneren den Schlagbolzen 3 aufnimmt. Dieser Schlagbolzen 3 wird in an sich bekannter Weise über einen Kolben 43 mit Axialschlägen beaufschlagt, der in einem vom Antrieb her nicht gezeigten, weil üblicherweise hin und her bewegten Zylinder 44 gelagert ist und durch die Verdichtung von Luft im Inneren des Zylinders zur Schlagausübung angeregt wird. Die hohle Antriebsspindel 2' erfährt ihren Drehantrieb über ein auf ihr aufgesetztes Zahnrad 45, das von einem vom nicht gezeigten Motor her betriebenen Ritzel 46 angetrieben ist. In der Antriebsspindel 2' wird eine Schalthülse 47 geführt, die ihrerseits zumindestens auf einem Teil ihrer Länge zur Führung des Schlagbolzens 3 dient. Die Schalthülse 47 ist an ihrem vorderen Ende mit einer Halterung für ein Schlagbohrwerkzeug 27 ausgerüstet, die im Ausführungsbeispiel, wie auch bei dem Ausführungsbeispiel der Fig. 1 bis 4 aus mindestens einer, vorzugsweise zwei Kugeln 16 besteht, die hier in einer seitlichen Ausnehmung 48 der Schalthülse 47 geführt ist und in der Stellung «Schlagbohren» in die Nut 27a des Schlagbohrwerkzeuges 27 eingreift. Damit die Kugel 16 diese Lage einhält, wird sie von einer etwa zylindrisch verlaufenden Innenfläche 49 des Bohrfutters 5' in dieser Lage gehalten. Die Sicherung in Axialrichtung übernimmt die Schalthülse 47. Auch bei der Ausführungsform der Fig. 5 bis 11 ist das Bohrfutter 5' mit einer Durchgangsöffnung nach hinten versehen, daher hülsenförmig ausgebildet und auf ein Aussengewinde 50 der Antriebsspindel 2' aufgeschraubt. Die Klemmbacken 7 sind angedeutet. Nicht gezeigt ist der Verstellmechanismus für die Klemmbacken 7, der in üblicher Weise ausgebildet sein kann. Die Schalthülse 47 weist an ihrem im inneren der Antriebsspindel 2' gelegene Ende einen Kragen 47a auf, in dem fest ein radial nach aussen ragender Stift 51 eingeschraubt ist. Dieser Stift 51 wird durch einen Längsschlitz 52 in der Antriebsspindel 2' nach aussen geführt und greift, wie insbesondere Fig. 7 zu entnehmen ist, in ein Langloch 53 einer Arretierhülse 54 ein, deren Aufbau und Funktionsweise noch im einzelnen beschrieben werden wird. Diese Arretierhülse 54 wiederum steht, was aus Fig. 6 ersichtlich ist, über eine Kupplung mit einem Handgriff 55 in Verbindung, der aussen auf dem Führungsrohr 42 sitzt und diesen über einen Bereich von mindestens 180° umgreift, was aus Fig. 8 deutlich wird. Dieser Handgriff 55 steht mit einem Mitnehmerring 56 über zwei diametral gegenüberliegenden Stifte 57 fest in Verbindung, die ihrerseits durch Längsschlitze 58 in dem Führungsrohr 42 nach aussen geführt sind. Der Mitnehmerring 56 liegt in einer Nut 54a der Mitnehmerhülse 54, so dass durch eine aus der Lage der Fig. 5 nach rechts gerichtete Axialbewegung des Handgriffes 55 um den Hub h (Fig. 6) die Schalthülse 47 aus der in der Fig. 5 gezeigten Lage in die Lage der Fig. 6 gebracht werden kann. Diese Lage entspricht der Stellung «Bohren» der Handbohrmaschine. Es ist zu erkennen, dass in dieser Lage der Schalthülse 47 die Klemmbacken 7 radial freigegeben sind und durch die Betätigung des Steckschlüssels 12 ähnlich wie bei der Ausführungsform der Fig. 1 radial nach innen verstellt werden können. Wie aus Fig. 6 auch deutlich wird, können die Klemmbacken 7 dabei Bohrwerkzeuge bis zum Durchmesser D aufnehmen, was bei der Ausführungsform der Fig. 1, wo die maximale Öffnung zwischen den Klemmflächen 7a dem Schaftdurchmesser für ein Schlagbohrwerkzeug entsprach, nicht der Fall war. Bei der Ausführungsform der Fig. 5 und 6 erweitert sich demnach der Durchmesser der einzusetzenden Bohrwerkzeuge um die gesamte Wandstärke der Schalthülse 47, die in ihrem Inneren zur Aufnahme der Schlagbohrwerkzeuge ausgelegt ist.

Aus Fig. 6 ist auch zu erkennen, dass in der zurückgezogenen Lage der Schalthülse 47 die Kugel 16 aus ihrer Lage gemäss Fig. 5 radial nach aussen gedrückt worden ist, dadurch, dass sie auf das Ende des Schlagbolzens 3 auftrifft und in eine zu diesem Zweck vorgesehenen nach vorne offene Längsnut 59 in der Antriebsspindel 2' hereingedrückt wird. Die Kugel 16 ist daher in der Stellung gemäss Fig. 6 in der Ausserbetriebsstellung. Da das Ende des Schlagbolzens 3 nicht bis in den Bereich der Klemmfläche 7a der Klemmbacken 7 reicht, kann in dieser Stellung der Handbohrmaschine das Bohrfutter 5' in bekannter Weise betätigt und eingesetzt werden. Die Handbohrmaschine ist nur zum Bohren geeignet und ausgelegt. Das Bohrfutter 5' steht drehfest mit dem Drehantrieb in Verbindung. Eine Axialbewegung des Bohrwerkzeuges ist unterbunden.

Da es bei der Ausführungsform der Fig. 5 bis 11 darauf ankommt, die Schalthülse 47 jeweils in den beiden Endlagen «Bohren» (Fig. 6) und «Schlagbohren» (Fig. 5) zu arretieren, ist die Arretierhülse 54 in besonderer Weise ausgebildet und angeordnet. Sie steht nämlich, wie aus der bisherigen Erläuterung deutlich wird, über den Stift 51 nicht nur axial mit der Schalthülse 47 in Verbindung. Sie ist dadurch, dass der Stift 51 durch die Antriebsspindel 2' hindurchgeführt ist, auch in Drehverbindung mit der Antriebsspindel 2'. Ihre Betätigung über den Handgriff 55, der aussen am Gehäuse liegt und daher nicht mitgedreht werden soll, kann daher nur über die vorher erwähnte Kupplung geschehen, die ein Abkuppeln der Drehbewegung nach aussen ermöglicht.

Zuletzt soll erläutert werden, dass die Arretierhülse 54 in der in der Fig. 6 gezeigten Endstellung «Bohren» dadurch gesichert wird, dass elastisch federnde Arme 60, die mit einer innen umlaufenden Nut 61 ausgerüstet sind, in dieser Endlage der Schalthülse 47 und der axial damit verbundenen Arretierhülse 54 über einen fest auf dem Aussenumfang der Antriebsspindel 2' aufgesetzten Ring 62 greifen. Die Endlage der Schalthülse 47 ist so gesichert. Erreicht wird das dadurch, wie bereits angedeutet, dass der Handgriff 55 aus der Lage der Fig. 5 nach rechts bis in die Lage der Fig. 6 verschoben wird, wobei der Mitnehmerring 56 an der Wandung der Nut 54a zur Anlage kommt und dadurch die Arretierhülse 54 so weit nach rechts schiebt, dass ihre federnden Arme 60 über den Ring 62 greifen. Soll aus der Stellung der Fig. 6 in die Stellung «Schlagbohren» nach Fig. 5 umgeschaltet werden, so wird der Handgriff 55 aus der Stellung der Fig. 6 um den Hub h nach links verschoben. Der Mitnehmerring 56, der über die Stifte 57 fest mit dem Handgriff 55 in Verbindung steht, löst sich dabei von der rechten Wandung der Nut 54 a und trifft mit einer an seiner nach links gerichteten Seite vorgesehenen Verzahnung 56 a (Fig. 6) auf eine korrespondierende Verzahnung 54 b der Arretierhülse 54 und kann nun die Arretierhülse 54 nach links verschieben. Bei dieser Bewegung wird der Mitnehmerring 56 gegen die Kraft einer Rückstellfeder 63 bewegt, die an einer Scheibe 64 anliegt, die sich ihrerseits an einem Anschlag der Arretierhülse 54 abstützt.

Um die Arretierhülse 54 dann in der linken Endstellung (Fig. 5) zu arretieren, sind, wie insbesondere aus Fig. 10 zu erkennen ist, jeweils an der Innenseite der Arretierhülse 54 Vertiefungen 65 in der Art eines Bajonettverschlusses vorgesehen, die eine Art Einführöffnung für Stifte 66 begrenzen, welche fest in die Antriebsspindel 2' eingesetzt sind. Diese Stifte 66 werden daher bei der Schiebebewegung der Arretierhülse 54 in die trichterförmige Öffnung der bajonettverschlussartig ausgebildeten Vertiefung 65 hereingeführt und können dann durch eine Verdrehung um den Winkel α (Fig. 11) in den Arretierbereich 65a formschlüssig einrasten, insbesondere wenn beispielsweise die Schalthülse 47 durch eine nicht gezeigte Rückstellfeder beaufschlagt wird, die in Richtung zum Bohrfutter 5' auf die Hülse wirkt. Um diese geringe Drehbewegung um den Winkel α zu ermöglichen, ist der Stift 51 der die Schalthülse 47 mit der Arretierhülse 54 verbindet, in einem in Umfangsrichtung um den Winkelausschlag α verlaufenden Langloch 53 angeordnet. Das diametral gegenüberliegende Langloch 53' ist nur aus Gründen der Vereinfachung der Montage vorgesehen und kann je nach der Lage der Hülse bei der Montage ebenfalls zum Einsetzen des Stiftes 51 verwendet werden. Damit die Drehbewegung um den Winkel α zum Zweck des Verrastens der Stifte 66 von aussen ermöglicht wird, ist es auch noch notwendig, den Längsschlitz 58, in dem der Mitnehmerstift 57 geführt ist, zumindestens an seinem linken Ende (siehe Fig. 6) um einen solchen Betrag in Umfangsrichtung zu verbreitern, dass der Winkelausschlag α vom Handgriff 55 aus auf die Arretierhülse 54 übertragen werden kann. Damit anschliessend der Mitnehmerring 56 und der Handgriff 55 wieder ausser Eingriff mit der Verzahnung 45b kommen, d.h. also, damit die Verzahnung 56a des Mitnehmerringes 56 wieder ausgedrückt werden kann, muss die Länge der Verbreiterung 58a, die in Fig. 6 angedeutet ist, mindestens dem Durchmesser r des Mitnehmerstiftes 57 zuzüglich der Höhe a (Fig. 10) der Verzahnung 54b entsprechen. Der Mitnehmerring wird bei einer solchen Ausführung durch die Rückstellkraft der Feder 63 selbsttätig aus der Verzahnung 54b gelöst, wenn der Handgriff 55 freigegeben wird. Der Einsatz «Schlagbohren» (Fig. 5) ist dann möglich. Zur Rückschaltung wird umgekehrt vorgegangen. Der Angriff wird zunächst wieder so weit zurückgeschoben, bis die beiden Verzahnungen 54b und 56a ineinandergreifen. Dann ist das Losdrehen der Arretierhülse 54 aus ihrer Bajonettverrastung möglich und die Hülse kann anschliessend in die Stellung der Fig. 6 zurückgefahren werden.

**Patentansprüche**

1. Werkzeugspannfutter (5) für eine Bohrmaschine, insbesondere für eine Handbohrmaschine, mit der wahlweise die Drehbewegung einer hohlen Antriebsspindel (2) auf ein Bohrwerkzeug (27) übertragen, oder eine von einem durch die Antriebsspindel (2) geführten Schlagbolzen (3) auf das Ende eines Bohrwerkzeuges (27) ausgeübte Schlagwirkung erzeugt werden kann, bei dem eine Aussenkappe (18) an dem Ende der Antriebsspindel (12) befestigt ist, die Klemmbacken (7) enthält, die durch Verdrehung der Aussenkappe (18) zur Erfassung des Schaftes des Bohrwerkzeuges (27) radial verstellbar sind und bei dem eine zentrale Durchgangsöffnung für den Schlagbolzen (3) vorgesehen ist, dadurch gekennzeichnet, dass die Aussenkappe (18) die Aufnahmehülle für eine Schlagbohrhalterung bildet, in der der Schaft des Bohrwerkzeuges (27) axial beweglich, aber drehfest geführt ist und dass Schaltmittel (14, 47) zur wechselseitigen Ein- und Ausschaltung der Funktion der beiden Bohrwerkzeughalterungen vorgesehen sind, so dass in der Stellung «Bohren» nur die Klemmbacken (7) und in der Stellung «Schlagbohren» nur die Schlagbohrhalterung den Schaft des Bohrwerkzeuges (27) erfasst.

2. Werkzeugspannfutter nach Anspruch 1, dadurch gekennzeichnet, dass die Schaltmittel aus einer axial bewegbar im Bohrfutter (5) geführten und mit Hilfe der Aussenkappe (18) axial verstellbaren Hülse (14) bestehen, die in der Stellung «Schlagbohren» mit einer schrägen Anlauffläche (14a) unter Federdruck an mindestens einer radial beweglichen Kugel (16) anliegt und diese in eine Axialnut (27a) am Schaft eines Schlagbohrwerkzeuges drückt, in der Stellung «Bohren» dagegen die Kugel (16) radial freigibt, die sich dann durch die axiale und radiale Zustellbewegung der Klemmbacken (7) zum Werkzeugschaft an deren Aussenseite anlegen und in einer radialen Stellung gehalten sind, in der sie nicht in den Bereich der lichten Weite zwischen den Klemmbacken hereinragen.

3. Werkzeugspannfutter nach den Ansprüchen 1 und 2, dadurch gekennzeichnet, dass der Drehbereich der Aussenkappe (18) mit Hilfe von Einrastmitteln (20) festgelegt und durch Endanschläge (21) begrenzt ist.

4. Werkzeugspannfutter nach einem der Ansprüche 1 bis 3, dadurch gekennzeichnet, dass die Aussenkappe (18) am äusseren Ende des Bohrfutters (5) neben dem Verstellring (10) für die Zustellung der Klemmbacken (7) vorgesehen ist.

5. Werkzeugspannfutter nach einem der Ansprüche 2 bis 4, dadurch gekennzeichnet, dass am äussersten Ende der Klemmbacken (7) eine Haltenase (7'') angeordnet ist, die zusammen mit einer Haltenase (6') am Bohrfutterkern (6) ein Herausfallen der Kugeln (16) aus ihrer Halterung verhindert.

6. Werkzeugspannfutter nach einem der Ansprüche 2 bis 5, dadurch gekennzeichnet, dass die Aussenkappe (18) mit Aussparungen (25) am Umfang versehen ist, die in der Endlage, in der die Haltehülse (14) die Stellung «Bohren» einnimmt und die Kugeln (16) radial freigibt, mit bekannten Einsecköffnungen (26) für den Verstellschlüssel (12) für die Klemmbacken (7) fluchten, in der anderen Endlage «Schlagbohren» dagegen verdreht gegenüber den dann verdeckten Einsecköffnungen (26) sind.

7. Werkzeugspannfutter nach Anspruch 6, dadurch gekennzeichnet, dass der Verdrehbereich der Aussenkappe (18) 60° beträgt.

8. Werkzeugspannfutter nach einem der Ansprüche 2 bis 7, dadurch gekennzeichnet, dass der Aussenkappe (18) ausserdem ein radial nach innen ragender Nocken (22) zugeordnet ist, der in der Stellung «Bohren» einen im Bohrfutter (5) gelagerten Sicherungsstift (23) radial gegen Federkraft in den Bereich zwischen den Klemmbacken (7) hereindrückt, der kurz vor dem Ende des in das Bohrfutter (5) hereinragenden Schlagbolzens (3) liegt.

9. Werkzeugspannfutter nach Anspruch 1, dadurch gekennzeichnet, dass die Schaltmittel aus einer Schalthülse (47) bestehen, die durch die zentrale Durchgangsöffnung ragt, drehfest mit der Antriebsspindel (2') verbunden und axial verschiebbar ist und in zwei jeweils dem Einsatz zum Bohren oder Schlagbohren zugeordneten Endstellungen arretierbar ist sowie an ihrem in das Bohrfutter (5') hereinragenden Ende Mittel zur drehfesten Verbindung, aber axialen Führung eines Schlagbohrwerkzeuges (27) aufweist.

10. Werkzeugspannfutter nach Anspruch 9, dadurch gekennzeichnet, dass das Bohrfutter (5') aussen auf die hohle Antriebsspindel (2') aufgeschraubt ist und dass die Schalthülse (47) im Inneren der Antriebsspindel (2') geführt ist und ihrerseits zur Führung des Schlagbolzens (3) dient.

11. Werkzeugspannfutter nach einem der Ansprüche 9 oder 10, dadurch gekennzeichnet, dass der Schalthülse (47) ein solcher Axialhub zugeordnet ist, dass sie in der Endlage, die dem Einsatz zum Bohren zugeordnet ist, mit ihrem Stirnende hinter dem Bereich der Zustellführung der Klemmbacken (7) liegt, während sie in der Endlage «Schlagbohren» zwischen die radial zurückgedrehten Enden der Klemmbacken (7) reicht und von diesen radial gehalten ist.

12. Werkzeugspannfutter nach einem der Ansprüche 9 bis 11, dadurch gekennzeichnet, dass die Endlagen der Schalthülse (47) über eine aussen an der Antriebsspindel (2') geführte Arretierhülse (54) gesichert werden, die axial fest mit der Schalthülse (47) verbunden ist und von aussen in zwei Endlagen verschiebbar und dort arretierbar ist.

13. Werkzeugspannfutter nach Anspruch 12, dadurch gekennzeichnet, dass die Arretierhülse (54) über einen radial verlaufenden und durch einen Längsschlitz (52) in der Antriebsspindel (2') geführten Stift (51) mit der Schalthülse (47) und über eine lösbare Kupplung mit einem aussen am Gehäuse (42) der Bohrmaschine geführten Handgriff (55) o.dgl. verbunden ist.

14. Werkzeugspannfutter nach Anspruch 13, dadurch gekennzeichnet, dass der Stift (51) in der Arretierhülse (54) in einem in Umfangsrichtung verlaufenden Langloch (53) beweglich angeordnet ist, dessen Länge mindestens der Länge von bajonettverschlussartig ausgebildeten Ausnehmungen (65) an der Innenseite der Arretierhülse (54) entspricht, die mit fest an der Antriebsspindel (2') angeordneten Verriegelungsvorsprüngen (66) zur Sicherung der Endlage «Schlagbohren» der Schalthülse zusammenwirkt.

15. Werkzeugspannfutter nach Anspruch 14, dadurch gekennzeichnet, dass die Verriegelungsvorsprünge als in die Antriebsspindel (2') eingesetzte Stifte (66) ausgebildet sind.

16. Werkzeugspannfutter nach einem der Ansprüche 12 bis 15, dadurch gekennzeichnet, dass die Arretierhülse (54) an dem von den bajonettverschlussartigen Ausnehmungen (65) abgewandten Ende mit federnden Rastarmen (60) versehen ist, die zur Sicherung der Endlage «Bohren» der Schalthülse (47) über einen Wulst (62) an der Antriebsspindel (2') greifen.

17. Werkzeugspannfutter nach Anspruch 13, dadurch gekennzeichnet, dass die Kupplung aus einem verdrehbar und axial verschiebbar auf der Arretierhülse (54) angeordneten Mitnehmerring (56) besteht, der mit dem Handgriff (55) fest verbunden ist, und an Anschlägen (54a, 54b) an der Arretierhülse (54) anlegbar ist.

18. Werkzeugspannfutter nach Anspruch 17, dadurch gekennzeichnet, dass der den bajonettverschlussartig ausgebildeten Ausnehmungen (65) zugewandte Anschlag der Arretierhülse (54) als ein mit axialen Vorsprüngen (54b) versehener Anschlagkragen ausgebildet ist und dass der Mitnehmerring (56) mit korrespondierenden Vorsprüngen (56a) ausgestattet ist, die formschlüssig mit den Vorsprüngen der Arretierhülse (54) zusammenwirken und eine für die Bajonettverrastung ausreichende Verdrehung ($\alpha$) der Arretierhülse in der Endlage «Schlagbohren» von aussen ermöglichen.

19. Werkzeugspannfutter nach einem der Ansprüche 17 oder 18, dadurch gekennzeichnet, dass der Mitnehmerring (56) gegen die Kraft einer Feder (63) in Richtung auf die axialen Vorsprünge (54b) des Anschlagkragens drückbar ist.

20. Werkzeugspannfutter nach einem der Ansprüche 18 oder 19, dadurch gekennzeichnet, dass die axialen Vorsprünge in der Art einer Verzahnung (54b, 56a) ausgebildet sind.

21. Werkzeugspannfutter nach einem der Ansprüche 17 bis 20, dadurch gekennzeichnet, dass der Mitnehmerring (56) über zwei diametral gegenüberliegende Stifte (57) mit dem das Gehäuse (42) aussen um mindestens 180° umgreifenden Handgriff (55) in Verbindung steht, dass die Stifte (57) in Längsschlitzen (58) im Gehäuse (42) geführt sind und dass diese Längsschlitze mindestens an dem im Bohrfutter (5') zugewandten Ende eine Verbreiterung (58a) in Umfangsrichtung aufweist, die dem zur Bajonettverrastung nötigen Verdrehung ($\alpha$) entspricht.

22. Werkzeugspannfutter nach den Ansprüchen 20 und 21, dadurch gekennzeichnet, dass die Verbreiterung (58a) der Längsschlitze (58) eine axiale Ausdehnung aufweist, die mindestens dem Durchmesser (r) der den Mitnehmerring (56) mit dem Handgriff (55) verbindenden Stifte (57) zuzüglich der Höhe (a) der Verzahnung (54b) am Anschlagkragen entspricht.

23. Werkzeugspannfutter nach Anspruch 9, dadurch gekennzeichnet, dass die Mittel zur drehfesten Verbindung und axialen Führung des Schlagbohrwerkzeuges (27) an der Schalthülse (47) aus Kugeln (16) bestehen, die in Ausnehmungen der Schalthülse (47) radial beweglich geführt und in der Stellung «Bohren» der Schalthülse von dem in der Schalthülse geführten Schlagbolzen (3) in Längsnuten (59) der Antriebsspindel (2') gedrückt sind, während sie in der Stellung «Schlagbohren» in das Innere der Schalthülse und in korrespondierende Ausnehmungen (27a) des Schlagbohrwerkzeuges (27) hereinragen und in dieser Lage durch aussen an die Schalthülse (47) angrenzende Teile (49) des Bohrfutters (5') gehalten sind.

24. Werkzeugspannfutter nach Anspruch 23, dadurch gekennzeichnet, dass die Längsnuten (59) in der Antriebsspindel (2') zum Bohrfutter (5') hin offen sind und dass vor jeder Längsnut (59) schräg zur Achse (8) der Antriebsspindel (2') verlaufende Innenseiten von Klemmbacken (7) vorgesehen sind.

## Claims

1. Tool chuck (5) for a drilling machine, particularly a hand drill, with which it is possible optionally to transmit the rotary movement of a hollow drive spindle (2) to a drilling tool (27) or to generate a percussion effect which is exerted by a percussion bar (3) guided through the drive spindle (2) onto the end of a drilling tool (27) and wherein an external cap (18) is fixed on the end of the drive spindle (12) and contains clamping jaws (7) which by rotation of the external cap (18) are radially adjustable to grip the shank of the drilling tool (27) and in which a central aperture is provided for the percussion bar (3), characterised in that the external cap (18) constitutes the casing for a percussion drill holder in which the shank of the drilling tool (27) is rotationally rigid but guided for axial movement and in that switching means (14, 47) are provided for the alternate switching on and off of the function of the two drilling tool holders so that in the "drilling" position, only the clamping jaws (7) and in the "percussion drilling" position only the percussion drilling holder will grip the shank of the drilling tool (27).

2. Tool chuck according to Claim 1, characterised in that the switching means consist of a sleeve (14) guided for axial movement in the chuck (5) and axially adjustable by means of the external cap (18) and which, in the "percussion drilling" position, have an oblique approach surface (14a) which bears under spring pressure on at least one radially movable ball (16), pressing this latter into an axial groove (27a) on the shank of an impact drilling tool whereas, in the "drilling" position, it releases the ball (16) radially which then, due to the axial and radial feed movement of the clamping jaws (7) to the tool shank, come to bear on the outside thereof and are maintained in a radial position in which they do not project into the inside diameter between the clamping jaws.

3. Tool chuck according to Claims 1 and 2, characterised in that the range of rotation of the external cap (18) is established by locking means (20) and is limited by end stops (21).

4. Tool chuck according to one of Claims 1 to 3, characterised in that the external cap (18) is provided on the outer end of the chuck (5) alongside the adjusting ring (10) for advancing the clamping jaws (7).

5. Tool chuck according to one of Claims 2 to 4, characterised in that there is at the outermost end of the clamping jaws (7) a retaining lug (7) which together with a retaining lug (6') on the drill core (6), prevent the balls (16) falling out of their holder.

6. Tool chuck according to one of Claims 2 to 5, characterised in that the external cap (18) is provided on its periphery with recesses (25) which, in the extreme position in which the retaining sleeve (14) assumes the "drilling" position and radially releases the balls (16), are aligned with known apertures (26) into which it is possible to fit the adjusting key (12) for the clamping jaws (7), whereas in the other extreme position, that of "percussion drilling", they are opposite the then concealed apertures (26).

7. Tool chuck according to Claim 6, characterised in that the range of rotation of the external cap (18) amounts to 60°.

8. Tool chuck according to one of Claims 2 to 7, characterised in that a radially inwardly projecting cam (22) is furthermore associated with the external cap (18) and, in the "drilling" position, it presses a securing pin (23) mounted in the chuck (5) radially and against spring force into the region between the clamping jaws (7) which is located just before the and of the percussion bar (3) which projects into the chuck (5).

9. Tool chuck according to Claim 1, characterised in that the switching means consist of a switching sleeve (47) which projects through the central aperture, is rotationally rigidly connected to the drive spindle (2') and is axially displaceable, being capable of being locked in two extreme positions which are in each case associated with use of the drill for drilling or for impact drilling respectively, and having at its end which projects into the chuck (5') means for rotationally rigid connection but axial guidance of a percussion drilling tool (27).

10. Tool chuck according to Claim 9, characterised in that the drilling chuck (5') is screwed onto the outside of the hollow drive spindle (2') and in that the switching sleeve (47) is guided inside the drive spindle (2') and for its part serves to guide the percussion bar (3).

11. Tool chuck according to one of Claims 9 or 10, characterised in that associated with the switching sleeve (47) is an axial travel such that in the extreme position which is associated with usage for drilling purposes, it has its end face behind the region of the advancing guide of the clamping jaws (7), whereas in the «percussion drilling» extreme position, it extends between the radially turned-back ends of the clamping jaws (7) by which it is radially held.

12. Tool chuck according to one of Claims 9 to 11, characterised in that the extreme locations of the switching sleeve (47) are secured by, guided on the outside of the drive spindle (2'), a locking sleeve (54) which is axially rigidly connected to the swittching sleeve (47) and is displaceable from the outside into and can be locked in two extreme positions.

13. Tool chuck according to Claim 12, characterised in that the locking sleeve (54) is connected via a radially extending rod (51) guided through a longitudinal slot (52) in the driving spindle (2') to the switching sleeve (47) and via a separable coupling to a handle (55) or the like which is guided on the outside of the drilling machine casing (42).

14. Tool chuck according to Claim 13, characterised in that the rod (51) is located for movement in the locking sleeve (54) in an elongated hole (53) extending in a peripheral direction, the length of the hole (53) corresponding at least to the length of bayonet-fitting recesses (65) on the inside of the locking sleeve (54) which co-operate with locking projections (66) disposed rigidly on the driving spindle (2') to secure the extreme position of the switching sleeve which is the "percussion drilling" position.

15. Tool chuck according to Claim 14, characterised in that the locking projections are constructed as rods (66) which are inserted into the driving spindle (2').

16. Tool chuck according to one of Claims 12 to 15, characterised in that the locking sleeve (54), at the end remote from the bayonet-fitting recesses (65), is provided with spring loaded locking arms (60) which, to secure the extreme "drilling" position of the switching sleeve (47), engage over a bead (62) on the driving spindle (2').

17. Tool chuck according to Claim 13, characterised in that the coupling consists of a drive ring (56) located rotatably and axially displaceably on the locking sleeve (54), the driver ring (56) being rigidly connected to the handle (55) and being adapted to be applied against abutments (54a, 54b) on the locking sleeve (54).

18. Tool chuck according to Claim 17, characterised in that the abutment on the locking sleeve (54) which is towards the bayonet-fitting type recesses (65) is constructed as an abutment collar provided with axial projections (54b) and in that the driver ring (56) is equipped with corresponding projections (56a) which co-operate in formlocking manner with the projections on the locking sleeve (54) permitting from outside a rotation (α) of the locking sleeve in the extreme "percussion drilling" position which is adequate for the bayonet fitting to engage and lock.

19. Tool chuck according to one of Claims 17 or 18, characterised in that the driver ring (56) can be pressed in the direction of the axial projections (54a) of the abutment collar against the force of a spring (63).

20. Tool chuck according to one of Claims 18 or 19, characterised in that the axial projections are constructed in the manner of serrations (54b, 56a).

21. Tool chuck according to one of Claims 17 to 20, characterised in that the driver ring (56) communicates via two diametrically opposite rods (57) with the handle (55) which engages around at least 180° of the circumference of the housing (42) and in that the rods (57) are guided in longitudinal slots (58) in the housing (42) and in that these longitudinal slots have at least at the end which is towards the drilling chuck (5′) a widened-out portion (58a) in the peripheral direction which corresponds to the amount of rotation (α) necessary for the bayonet fixing to engage.

22. Tool chuck according to Claims 20 and 21, characterised in that the widening-out (58a) of the longitudinal slots (58) has an axial extent which corresponds at least to the diameter (r) of the rods (57) connecting the driving ring (56) to the handle (55) plus the height (a) of the teeth (54b) on the abutment collar.

23. Tool chuck according to Claim 9, characterised in that the means for rotationally rigid connection and axial guidance of the percussion drilling tool (27) on the switching sleeve (47) consists of balls (16) which are guided for radial movement in recesses in the switching sleeve (47) and which, in the "drilling" position of the switching sleeve, are pressed into longitudinal grooves (59) in the driving spindle (2′) by the percussion bar (3) guided in the switching sleeve while in the "percussion drilling" position, they protrude into the interior of the switching sleeve and into corresponding recesses (27a) in the percussion drilling tool (27), being held in this position by parts (29) of the drilling chuck (5′) which are externally adjacent the switching sleeve (47).

24. Tool chuck according to Claims 23, characterised in that the longitudinal slots (59) in the driving spindle (2′) are open towards the drilling chuck (5′) and in that there are in front of each longitudinal slot (59) inside faces of clamping jaws (7) which extend obliquely to the axis (8) of the driving spindle (2′).

**Revendications**

1. Mandrin porte-outil (5) pour perceuse notamment pour perceuse à main qui transmet sélectivement le mouvement de rotation d'une broche d'entraînement (2) creuse à un outil de perçage (27) ou un effet de percussion exercé par un percuteur (3) guidé à travers la broche d'entraînement (2) sur l'extrémité d'un outil de perçage (27), avec un capot (18) fixé à l'extrémité de la broche d'entraînement (12) qui comporte les mors (7), ces mors pouvant être réglés radialement par rotation du capot (18) pour saisir l'axe de l'outil de perçage (27) et avec une ouverture de passage centrale pour le percuteur (3), caractérisé en ce que: le capot (18) forme la gaine de réception du support de l'outil de percussion dans lequel le corps de l'outil de percussion (27) est mobile axialement en étant guidé solidairement en rotation et par des moyens de commutation (14, 47) pour mettre en œuvre ou hors service de manière alternative la fonction des deux supports d'outil de perçage, de sorte qu'en position «perçage», seuls les mors (7) ne soient en prise sur le corps de l'outil de perçage (27) et qu'en position «perçage avec percussion» (27), seul le support de perçage à percussion saisisse le corps de l'outil de perçage.

2. Mandrin porte-outil selon la revendication 1, caractérisé en ce que les moyens de commutation se composent d'une douille (14) guidée de manière mobile axialement dans le mandrin (5) et réglable axialement à l'aide du capot (18), et qui en position «perçage avec percussion» s'appuie par une surface d'appui inclinée (14a) sous une pression de ressort contre au moins une bille (16) mobile radialement et pousse celle-ci dans une rainure axiale (27a) du corps d'un outil de perçage à percussion et qu'en position «perçage» la bille (16) soit par contre libérée radialement pour s'appuyer alors par le mouvement de serrage axial et radial des mors (7) contre la face extérieure du corps de l'outil et reste maintenue dans une position radiale dans laquelle elle ne pénètre pas dans la zone de l'intervalle libre entre les mors.

3. Mandrin porte-outil selon les revendications 1 et 2, caractérisé en ce que la zone de rotation du capot (18) est fixée à l'aide de moyens d'accrochage (20) et est limitée par des butées de fin de course (21).

4. Mandrin porte-outil selon l'une des revendications 1 à 3, caractérisé en ce que le capot (18) est prévu à l'extrémité extérieure du mandrin (5) à côte de la bague de réglage (20) pour resserrer les mors (7).

5. Mandrin porte-outil selon l'une des revendications 2 à 4, caractérisé en ce que l'extrémité extérieure des mors (7) comporte un bec de retenue (7′′) qui, en même temps qu'un bec de retenue (6′) prévu sur le corps (6) du mandrin, évite que les billes (16) ne puissent tomber de leur support.

6. Mandrin porte-outil selon l'une des revendications 2 à 5, caractérisé en ce que le capot (18) est muni de cavités (25) prévues à sa périphérie et qui en position de fin de course prise par la douille de retenue (14) pour le mode «perçage» et libèrent radialement les billes avec des orifices d'introduction (26) connus, pour la clé à mandrin (12) en étant alignées sur les mors (7) et qui dans l'autre position de fin de course correspondant au mode «perçage à percussion» sont tournées par rapport aux ouvertures (26) alors cachées.

7. Mandrin porte-outil selon la revendication 6, caractérisé en ce que la zone de rotation du capot (18) est de 60°.

8. Mandrin porte-outil selon l'une des revendication 2 à 7, caractérisé en ce que le capot (18) comporte en outre une came (22) en saillie radialement vers l'intérieur qui, en position «perçage» enfonce un goujon de sécurité (23) logé dans le mandrin (5), de manière radiale contre la force d'un ressort dans la zone entre les mors (7), goujon qui se trouve juste devant l'extrémité du percuteur (3) pénétrant dans le mandrin (5).

9. Mandrin porte-outil selon la revendication 1, caractérisé en ce que les moyens de commutation se composent d'une douille de commutation (47) qui traverse l'orifice central en étant reliée solidairement en rotation à la broche d'entraînement (2') et de manière coulissante axialement et qui peut être bloquée dans chacune des deux positions de fin de course correspondant respectivement au mode «perçage» et au mode «perçage avec percussion» ainsi que des moyens prévus à son extrémité pour pénétrer dans le mandrin (5') pour assurer une liaison solidairement en rotation, par un guidage axial d'un outil de perçage avec percussion (27).

10. Mandrin porte-outil selon la revendication 9, caractérisé en ce que le mandrin (5') est vissé extérieurement sur la broche d'entraînement (2'), creuse et en ce que la douille de commutation (47) est guidée à l'intérieur de la broche d'entraînement (2') et sert elle-même au guidage du percuteur (3).

11. Mandrin porte-outil selon l'une des revendications 9 ou 10, caractérisé en ce qu'à la douille de commutation (47) est associée une course axiale telle que dans l'une des positions de fin de course associées au mode «perçage» son extrémité frontale se trouve derrière la zone de rapprochement des mors (7) et que dans la position de fin de course correspondant au perçage avec percussion elle se trouve entre les extrémités radialement en retrait des mors (7) et soit maintenue radialement par ceux-ci.

12. Mandrin porte-outil selon l'une des revendications 9 à 11, caractérisé en ce que les positions de fin de course de la douille de commutation (47) sont bloquées par l'intermédiaire d'une douille de blocage (54) guidée extérieurement sur la broche d'entraînement (2'), douille qui est reliée solidairement dans la direction axiale à la douille de commutation (47) et qui de l'extérieur peut coulisser dans deux positions de fin de course et y être bloquée.

13. Mandrin porte-outil selon la revendication 12, caractérisé en ce que la douille de blocage (54) est reliée par un goujon (51) dirigé radialement et traversant une fente longitudinale (52) de la broche d'entraînement (2') à la douille de commutation (47) et par un accouplement débrayable à une poignée (55) ou analogue guidée extérieurement sur le boîtier (42) de la perceuse.

14. Mandrin porte-outil selon la revendication 13, caractérisé en ce que le goujon (51) est monté mobile dans un trou oblong (53) dirigé suivant la direction périphérique de la douille de blocage (54), la longueur du trou oblong correspondant au moins à la longueur des cavités (65) en forme de liaison de type baïonnette sur le côté intérieur de la douille de blocage (54) et coopérant avec des saillies de verrouillage (66) prévues solidairement sur la broche d'entraînement (2') pour bloquer la position de fin de course «perçage avec percussion» de la douille de commutation.

15. Mandrin porte-outil selon la revendication 14, caractérisé en ce que les saillies de verrouillage sont constituées par des broches (66) logées dans la broche d'entraînement (2').

16. Mandrin porte-outil selon l'une des revendications 12 à 15, caractérisé en ce que la douille de blocage (54) est munie à son extrémité opposée aux cavités (65) formant une liaison de type baïonnette de bras d'accrochage élastiques (60) qui pour bloquer la position de fin de course «perçage» de la douille de commutation (47) viennent prendre par-dessus un bourrelet (62) de la broche d'entraînement (2').

17. Mandrin porte-outil selon la revendication 13, caractérisé en ce que l'accouplement se compose d'une bague d'entraînement (56) susceptible de tourner et de coulisser axialement sur la douille de blocage (54), bague qui est reliée solidairement à la poignée (55) et vient s'appliquer contre les butées (54a, 54b) de la douille de blocage (54).

18. Mandrin porte-outil selon la revendication 17, caractérisé en ce que la butée de la douille de blocage (54) tournée vers les cavités (65) réalisées dans la liaison de type baïonnette est constituée sous la forme d'un collet de butée muni de saillies axiales (54b) et en ce que la bague d'entraînement (56) est munie de saillies correspondantes (56a) qui coopèrent par la forme avec les saillies de la douille de blocage (54) et permettent une rotation (α) de la douille de blocage en position de fin de course «perçage avec percussion» suffisante pour l'encliquetage de la liaison à baïonnette.

19. Mandrin porte-outil selon l'une des revendications 17 ou 18, caractérisé en ce que la bague d'entraînement (56) est susceptible d'être poussée dans la direction des saillies axiales (54b) du collet de butée contre la force d'un ressort (63).

20. Mandrin porte-outil selon l'une des revendication 18 ou 19, caractérisé en ce que les saillies axiales sont réalisées en forme de dentures (54b, 56a).

21. Mandrin porte-outil selon l'une des revendications 17 à 20, caractérisé en ce que la bague d'entraînement (56) est reliée par deux goujons (57) diamétralement opposés à la poignée (55) entourant extérieurement le boîtier (42) sur au moins 180°, les goujons (57) étant guidés dans des fentes allongées (58) du boîtier (42) et en ce que ces fentes allongées comportent au moins à l'extrémité tournée vers le mandrin (5') une partie élargie (58a) dans la direction périphérique et qui correspond à la course de rotation (α) nécessaire à l'encliquetage de la liaison de type baïonnette.

22. Mandrin porte-outil selon l'une des revendications 20 et 21, caractérisé en ce que la partie élargie (58a) des fentes longitudinales (58) comporte une extension axiale qui correspond au moins au diamètre (r) des goujons (57) reliant la bague d'entraînement (56) à la poignée (55) augmenté de la hauteur (a) de la denture (54b) sur le collet de butée.

23. Mandrin porte-outil selon la revendication 9, caractérisé en ce que les moyens de liaison solidaires en rotation et de guidage axial de l'outil de perçage à percussion (27) sont constitués par des billes (16) sur la douille de commutation (47), billes qui sont guidées mobiles dans la direction radiale dans les cavités de la douille de commutation (47) et qui en position «perçage» de la douille de commutation sont poussées dans des rainures longitudinales (59) de la broche d'entraînement (2') par le percuteur (3) guidé dans la douille de commutation alors qu'en position «perçage avec percussion», elles pénètrent à l'intérieur de la douille de commutation et dans des cavités correspondantes (27a) de l'outil de perçage à percussion (27) et sont maintenues dans cette position par des pièces (49) du mandrin (5') adjacentes extérieurement à la douille de commutation (47).

24. Mandrin porte-outil selon la revendication 23, caractérisé en ce que les rainures longitudinales (59) de la broche d'entraînement (2') sont ouvertes en direction du mandrin (5') et en ce qu'en avant de chaque rainure longitudinale (59'), les côtés intérieurs des mors (7) sont inclinés par rapport à l'axe (8) de la broche d'entraînement (2').

# Fig. 1

0 108 411

Fig. 2

Fig. 3

Fig. 4

Fig. 5

Fig. 6

0108 411

**Fig. 7**

53 51 55

66

66

65

65

54

47

53'

42

40

**Fig. 8**

55

57

57

56

54

42

54b

40

**Fig. 10**

53

54

65a

XI

65

54b

60

a

54a

**Fig. 11**

53

65

α

54

53'

**Fig. 9**

65

54b

54

61

60

23